# EUROPEAN PATENT SPECIFICATION

(11) **EP 3 254 966 B1**
(45) Date of publication and mention of the grant of the patent: **05.08.2020**
(21) Application number: 16173427.2
(22) Date of filing: 07.06.2016
(51) Int. Cl.: B64D 11/00, B64D 13/00

(54) **PANEL SYSTEM FOR COVERING THE CEILING PORTION OF AN AIRCRAFT CABIN**
PANEELSYSTEM ZUM ABDECKEN DES DECKENABSCHNITTS EINER FLUGZEUGKABINE
SYSTÈME DE PANNEAUX POUR RECOUVRIR LA PARTIE DE PLAFOND D'UNE CABINE D'AÉRONEF

(43) Date of publication of application: 13.12.2017
(73) Proprietor: Airbus Operations GmbH, 21129 Hamburg (DE)
(72) Inventor: Riedel, Christian, 21129 Hamburg (DE)
(74) Representative: Bird & Bird LLP

(56) References cited:
- EP-A1- 2 801 523
- EP-A2- 2 586 704
- US-A1- 2011 240 796
- US-A1- 2012 312 921
- US-A1- 2013 149 950

## Description

The present invention relates to a panel system for covering the ceiling portion of an aircraft cabin.

In an aircraft cabin the ceiling portion above the passenger seats and especially surfaces below the hatracks overhead the passenger seats are covered with panel systems, and on theses panel systems passenger supply units are mounted comprising lighting elements, air showers, i.e. nozzle arrangements for providing fresh air to passengers on the passenger seats, paxcall elements for calling a purser onboard an aircraft, speakers and probably additional entertainment devices. These passenger supply unit need to be supplied with fresh air, electrical power and further information signals for the devices of the supply unit. Therefore, corresponding supply means such an a fresh air supply and further electrical supply elements have to connected to the passenger supply unit so that the assembly of the panel system and the passenger supply unit in the aircraft cabin is a cumbersome and time consuming process.

Further, the position of the passenger supply units along the longitudinal axis of the aircraft cabin depends on the position of the seat rows along this axis. Hence, the distance along the longitudinal axis between adjacent passenger supply units on the panel system varies with the distance between the seat rows. In turn it is intended to employ panel systems which allow for mounting passenger supply units with a fixed length but with different distances between each other to reduce the variety of panel elements used in the aircraft cabin.

In the prior art panel systems for the aircraft cabin comprise a support frame formed of mounting rails extending parallel to the longitudinal axis. On these rails the passenger supply units are mounted at their required position along the longitudinal axis, and between adjacent passenger supply units cover panels of a fixed length are mounted on the rails to cover the intermediate space. The number of intermediate cover panels required to cover the space between adjacent passenger supply units depends on the distance along the longitudinal axis between adjacent seat rows. As several of these cover panels are employed between adjacent passenger supply units and these panels were often produced at different times in the production process, it occurs that contiguous cover panel have a slightly different colour which is visible for a passenger and results in an undesired impression on the passenger. Further, in these prior art systems the devices of the passenger supply unit are connected to the respective supply elements via conduits and cables freely guided above the cover panels and the passenger supply units, and during assembly each passenger supply unit has to be connected separately with the respective supply elements so that the assembly process is extremely time consuming.

Finally, it is a further technical problem with the afore-mentioned prior art panel systems that in case of retrofitting a new passenger seat arrangement the entire panel system has to be removed and conduit and cable connections have to be installed again so that the retrofitting process is time consuming, too.

US 2013/0149950A1 discloses a support structure for an air supply arrangement for air conditioning aircraft passenger cabins.

Hence, it is the object of the present invention to provide a panel system for the ceiling portion of an aircraft cabin which allows for a simple and fast assembly process and still provides for an aesthetical impression on the passengers sitting in seats below that system.

This object is achieved by the panel system according to claim 1.

Thus, the system of the present invention comprises a support panel which is e.g. mounted below the hatrack so that it covers a portion of the ceiling of the aircraft cabin. The support panel comprises a mounting surface which in the mounted state points towards the interior of the aircraft cabin, e.g. the passenger seats. Further, the support panel is provided with an air supply channel which can be supplied with fresh air from a fresh air source. The air supply channel extends along a longitudinal axis of the support panel, and in the mounted state of the support panel this longitudinal axis is parallel to the longitudinal axis of the entire cabin, i.e. the axis extending from the cockpit to the tail of the aircraft.

The support panel of the system of the present invention is provided with a plurality of air supply connectors on the mounting surface, and the air supply connectors are connected to the air supply channel and comprise an outlet opening so that fresh air may flow from the air supply channel through the opening of air supply connectors. Finally, the air supply connectors are arranged along the longitudinal axis at such positions that the distance between adjacent air supply connectors is always the same. Preferably, the air supply connectors are formed as studs protruding from the mounting surface.

In addition to the support panel, the system of the present invention comprises a plurality of cover panels and each cover panel comprises opposing transverse edges which are aligned so as to be parallel to each other. The cover panels are provided with at least one blind connector, and the blind connector and the air supply connectors of the support panel are configured such that one air supply connector and the blind connector can be brought into an engagement position in which the cover panel is supported on the support panel. Finally, the cover panels are configured such that when two cover panels are in adjacent engagement positions the transverse edges of these cover panels abut on each other in the longitudinal direction.

The afore-mentioned configuration of support panel and the cover panels allows for initially mounting a plurality of cover panels adjacent to each other on the support panel simply by connecting an air supply connector with a blind connector on the cover panel. This results in a continuous surface along the longitudinal direction formed by the cover panels and the air supply connectors are all closed by the connection with the blind connectors.

In particular, when the system of the present invention is initially mounted in an aircraft cabin every air supply connector of the support panel is closed. Thus a complete set of cover panels is used which can be produced in single production step so that it is avoided the differences of the colour of the cover panels occur. Hence the aesthetic appearance of the system is improved compared to the prior art.

Finally, the system of the present invention comprises at least one passenger supply unit comprising a housing with a fixing surface and a nozzle arrangement provided in the housing.

The fixing surface is provided with at least one air reception connector which is configured such that the passenger supply unit can be brought into an engagement position in which the air reception connector engages with one of the air supply connectors and in which the passenger supply unit is supported on the support panel. Inside the passenger supply unit the air reception connector is connected to the nozzle arrangement so that an airflow from the air reception connector through the nozzle arrangement into the aircraft cabin is possible. In particular, when a passenger supply unit is in the engagement position with one of the air supply connectors, an airflow is enabled from the air supply channel through said one air supply connector to the nozzle arrangement of said one passenger supply unit.

Thus, a passenger supply can easily be mounted on the support panel by firstly removing one of the cover panels and by bringing the reception connector of the passenger supply unit into engagement with air supply connector which has become accessible by the removal of the cover panel. The nozzle arrangement of the passenger supply unit is then directly connected with the air supply channel while the other air supply connectors as well as outer appearance of the combination of the remaining cover panels and the support panel is not affected when mounting the passenger supply unit.

Furthermore, when it is intended to retrofit an existing aircraft cabin with a new passenger seat arrangement with a distance between adjacent seat rows that differs from the distance of the originally installed seat arrangement, the passenger supply units of the system of the present invention can easily be displaced, since it is only required to release the connection between the reception connectors, to remove a cover panel and use it at the original position of the passenger supply unit and to position the latter at that position where the cover panel was removed. Hence, the displacement of the passenger supply unit during retrofitting is also facilitated to a large extent.

In a preferred embodiment wherein the fixing surface of the at least one passenger supply unit is provided with first and second air reception connectors, and the distance between these connectors corresponds to the distance between adjacent air supply connectors. With such an arrangement, the passenger supply unit always engages with two air supply connectors and it is already ensured by the initial assembly step that the passenger supply unit is correctly aligned with the longitudinal axis. Further, with such a design the passenger supply unit is more rigidly coupled to the support panel.

Furthermore, it is also conceivable that in a preferred embodiment the cover panels comprise first and second blind connectors, the distance between which corresponds to the distance between adjacent air supply connectors, and the first and second blind connectors are arranged on a straight line extending perpendicularly to the transverse edges. This facilitates the assembly of the cover panels on the support panel.

Preferably the passenger supply unit is provided with a locking element which is movably mounted on the passenger supply unit such that it is movable between a locked and a release position. Further, the locking element is configured such that when the passenger supply unit is in the engagement position on an air supply connectors and the locking element is in the locked position, a movement of the passenger supply unit away from the support panel is prevented, and when the passenger supply unit is in the engagement position on the air supply connector and its locking element is in the release position, a movement of the passenger supply unit away from the support panel is enabled. This latter movement opens the connection between the at least one air reception connector of the passenger supply unit and the air supply connector.

Hence, the locking element keeps the passenger supply unit in a defined position on the support panel, when the locking element is in the locked position so that after assembly the engagement position of the passenger supply unit is securely maintained.

In a further preferred embodiment, the locking element is movable between the locked and the release positions along a direction which is parallel to the mounting surface of the support panel. The studs thereon are provided with engagement means and when the passenger supply unit is in the engagement position on one of the plurality of air supply connectors and the locking element of said one passenger supply unit is in the locked position, said locking element is in engagement with the engagement means on the stud forming said one air supply connector.

In such a design the studs protruding from the mounting surface into the passenger supply unit are also employed as the support for the engagement means with which the locking element on the passenger supply unit may engage by a movement essentially perpendicular to the direction along which the studs extend. This results in a simple and reliable design without any further elements besides the studs protruding from the mounting surface on the support panel or the fixing surface on the passenger supply unit.

According to the invention, a groove is formed in the mounting surface of the support panel, the groove extends along the longitudinal axis and the plurality of air supply connectors are arranged within the groove. A surface of each of the plurality of cover panels pointing towards the interior cabin is flush with the mounting surface outside the groove, when each cover panel is received in the groove and the at least one blind connector of each cover panel is in the engagement position on one of the plurality of air supply connectors. This design results in a combination of the support panel and the cover panels that has a smooth outer appearance without a plurality of steps or the like.

In order to combine the mechanical connection for air supply of the passenger supply unit with the electrical connection and to maintain flexibility of the system and simplicity of the assembly thereof it is preferred when each of the supply connectors is part of a respective one of a plurality of supply arrangements which are equally spaced along the longitudinal axis. Each of the supply arrangements comprises at least one electrical supply element which is arranged in the mounting surface, and the position of the at least one electrical supply element relative to the air supply connector is identical for each supply arrangement. This allows to establish the electrical connections for the passenger supply unit in the vicinity of that air supply connector with which the passenger supply unit is in the engagement position.

Moreover, the at least one passenger supply unit can be provided with at least one electrical reception element adjacent to the air reception connector, and the electrical reception element is arranged relative to the air reception connector such that when the at least one passenger supply unit is in the engagement position with an air supply connector, the electrical reception element is electrically connected with the electrical supply element. Thus, in this preferred embodiment the electrical connection between the passenger supply unit and the respective electrical supplies for the aircraft cabin are also established when the respective air supply connector and the air reception connector of the passenger supply unit are brought into engagement.

As an alternative to the afore-mentioned embodiment or in addition, the support panel comprises a first induction coil, and the passenger supply unit is provided with a second induction coil. The first induction coil and the second induction coil are configured and arranged such that when the passenger supply unit is in the engagement position with one of the air supply connectors electrical signals can be transmitted from one of the first induction coil and the second induction coil to the other. Such a configuration allows for a contactless transmission of power or information between the support panel and the passenger supply unit.

In a particularly preferred embodiment the support panel comprises a printed circuit board on which the electrical supply elements of each of the supply arrangements are positioned, and the printed circuit board extends along or parallel to the longitudinal axis. In particular, the printed circuit board can be arranged within the afore-mentioned groove, and further it is possible that the printed circuit board comprises holes through which the studs protrude. The use of a printed circuit board further facilitates the assembly of the system of the present invention as electrical supply connectors of the supply arrangements can be installed on the support panel in a single step.

In addition to the electrical supply connectors the printed circuit board can be arranged on the mounting surface, in particular within the groove, and can comprise lighting elements being directed to the interior of the aircraft cabin when the printed circuit board is mounted on the support panel. The lighting elements can be formed as LEDs, OLEDs or other suitable light sources. Further, the cover panel is translucent so that light emitted by the lighting elements may penetrate the cover panel so as to illuminate the interior of the aircraft cabin. Thus, light sources for the aircraft cabin are installed together with the supply element for the passenger supply units. A further advantage of the combination of lighting elements on the printed circuit board and translucent cover panels is that during assembly of the passenger supply units the lighting elements can be used to indicate which cover panels have to removed in a first step by switching on only those lighting elements which are located below the respective cover panels.

It is further preferred that the printed circuit board arranged on the mounting surface is provided with proximity sensors wherein the cover panels are pervious for radiation generated by the proximity sensors. The proximity sensors can be formed as ultrasonic or infrared sensors but other types could be used as well. This allows to detect whether seats below the support panel are occupied or not and the installation of the respective sensors does not result in additional efforts, as the sensors are already arranged on the printed circuit board.

Finally, in a preferred embodiment the support panel extends along the longitudinal axis between first and second end faces and comprises first and second lateral edges on both sides of the longitudinal axis between the first and second end faces. In addition, the first lateral edge is provided with a first connector and a second connector, the first connector being arranged on the first lateral edge adjacent to the connection between the first end face and the first lateral edge. Further, the second connector is arranged on the first lateral edge adjacent to the connection between the second end face and the first lateral edge, and the first and second connectors are connected to the air supply channel so that an airflow from the first connector to the air supply channel and from the air supply channel to the second connector is enabled.

Such a configuration allow to either connect the support panels with air riser pipes extending upwards along the lateral walls of an aircraft cabin or to interconnect support panels which are arranged such that end faces thereof abut on each other.

In the following preferred embodiments of the present invention will be described in detail with reference to the accompanied drawings, wherein
- Fig. 1: is a perspective bottom view of a portion of a support panel of a first embodiment of a system according to the present invention,
- Fig. 2: is a perspective top view of support panels of the embodiment of Fig. 1,
- Fig. 3: is a cross-sectional view of the support panel of Figs. 1 and 2,
- Fig. 4: is a bottom view of a first passenger supply unit of the first embodiment of a system according to the present invention,
- Fig. 5: shows different views of a second passenger supply unit of the first embodiment of a system according to the present invention,
- Fig. 6: shows different views of the support panel and the passenger supply unit of the first embodiment of a system according to the present invention,
- Fig. 7: shows different views of the support panel and the passenger supply unit of a second embodiment of a system according to the present invention, and
- Fig. 8: shows a schematic view of the support panel of a third embodiment of a system according to the present invention.

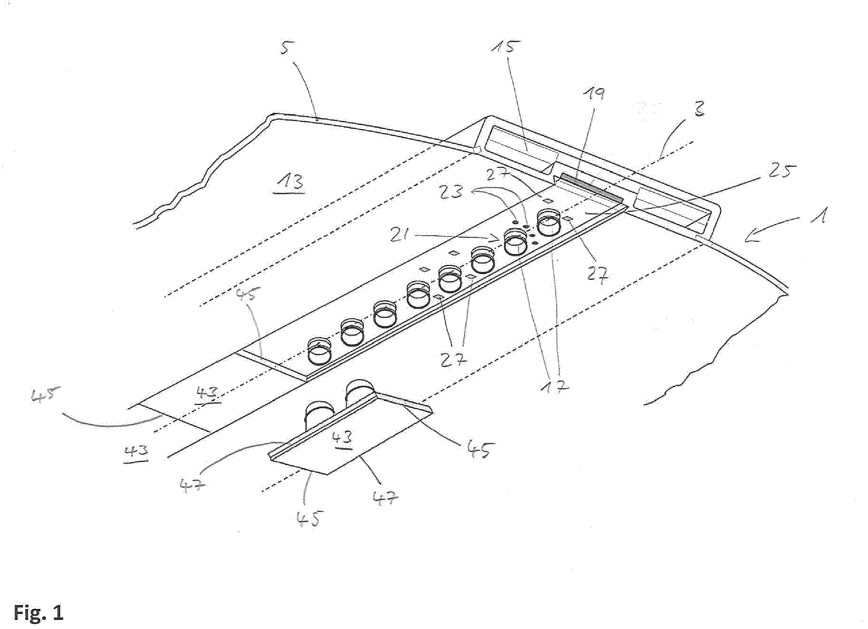

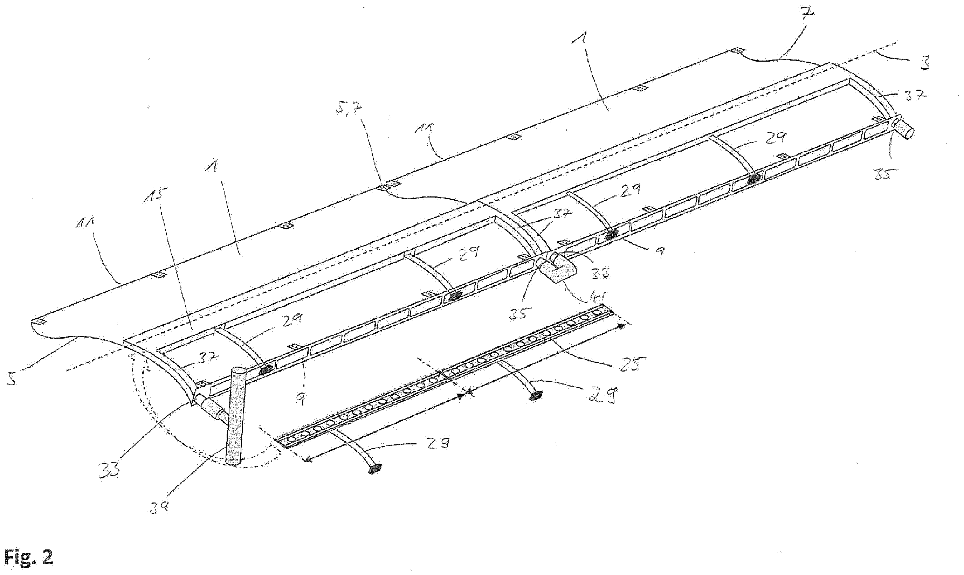

Figs. 1 to 6 show a first embodiment of a panel system for covering the ceiling portion of an aircraft cabin. The panel system according to the first embodiment comprises support panels 1 a portion of which is shown in Fig. 1, and Fig. 2 shows two of these support panels 1 arranged one after the other.

The support panels 1 of the preferred embodiments described herein are intended to be mounted below the hatracks and above the seat rows in the aircraft cabin so as to form a portion of the ceiling of the aircraft cabin. However, the invention is limited to the use of the panel system according to the present invention on hatracks, but can also be used on other portions of the ceiling of an aircraft cabin.

As can be seen in Figs. 1 and 2 the support panels 1 extend along a longitudinal axis 3 between a first end face 5 and a second end face 7 and comprise first and second lateral edges 9, 11 on both sides of the longitudinal axis 3 between the first and the second end faces 5, 7. When the support panels 1 are mounted below the hatracks, the longitudinal axis 3 extends parallel to the longitudinal axis of the aircraft cabin and, hence, perpendicular to the direction along which seat rows extend.

Further, the support panels 1 comprise a mounting surface 13 adapted to receive further panel elements as described below, and in the mounted state of the support panels 1 the mounting surface 13 points towards the interior of the aircraft cabin. The support panels 1 also comprise an air supply channel 15 which extends linearly along the longitudinal axis 3 from the first to the second end face 5, 7. In the preferred embodiments shown in the drawings, the air supply channel 15 is formed inside the support panel 1 so that the air supply channel 15 is an integral part of the support panel 1 and integrally formed therein. However, it is also conceivable that the air supply channel 15 is formed as a separate element mounted on the support panel 1.

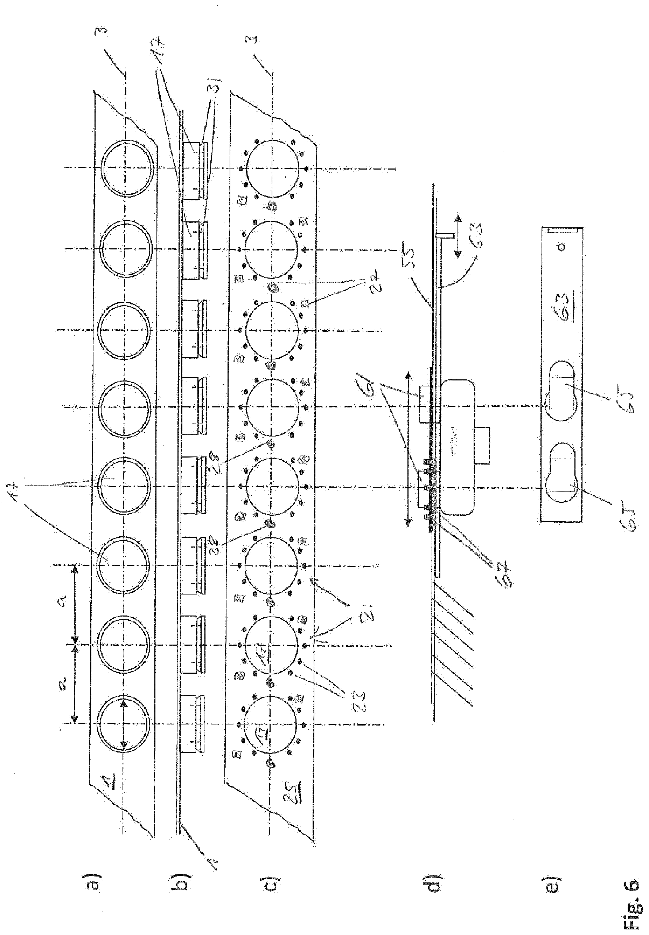

On the mounting surface 13 of the support panels 1 a plurality of air supply connectors are provided which are formed as studs 17 protruding essentially perpendicularly away from the mounting surface 13. This is also shown in Fig. 6 in which part a) is a partial sectional view from the top through the air supply channel, part b) a partial sectional view along the longitudinal axis 3 along the air supply channel 15 and part c) a partial bottom view onto the mounting surface 13. In these parts, it can be seen that the air supply connectors in the form of the studs 17 are arranged along the longitudinal axis 3 and the distance a between adjacent studs 17 is constant, i.e. adjacent studs 17 have always the same distance a from each other. Further, the studs 17 are connected to the air supply channel 15 and have an outlet opening so that an airflow from the air supply channel 15 through the outlet opening of the studs 17 is possible.

As can be seen in Fig. 1, the mounting surface 13 is provided with a groove 19 which forms a depression in the mounting surface 13 of the support panels 1. The groove 19 extends along the longitudinal axis 3 and the studs 7 are arranged within the groove 19. Furthermore, each of the supply connectors formed by the studs 17 is part of a respective one of a plurality of supply arrangements 21 which are also equally spaced along the longitudinal axis 3. In addition to the studs 17 the supply arrangements 21 comprise electrical supply elements 23 in the form of contact elements which are arranged in the mounting surface 13, and in particular in the groove 19. For each of the supply arrangements 21 the position of the electrical supply elements 23 relative to the air supply connector in the form of the stud 17 is identical, which can clearly be seen in part c) of Fig. 6. In other words, the configuration of the supply arrangements 21 is identical.

In the first preferred embodiment the electrical supply elements 23 are arranged on a strip-shaped printed circuit board 25 which extends inside the groove 19 along the longitudinal axis 3 from the first end face 5 to the second end face 7, and the electrical supply elements 23 are connected to conductor paths in the printed circuit board 25. Here, it has to be noted that it is also conceivable that the printed circuit board 25 extends parallel to but offset from the longitudinal axis 3. In addition, to the electrical supply elements 23, lighting elements in the form of LEDs 27 are fixed to the printed circuit board 25 and also connected via conductor paths in the printed circuit board 25. Here, it is conceivable that other types of lighting elements such as OLEDs or the like are employed.

In addition, the printed circuit board 25 comprises proximity sensors 28 which can be formed as ultrasonic or infrared sensors. However, other types of proximity sensors can also be used. Further, the cover panels 43 are also pervious or transparent for the radiation generated or emitted by the proximity sensors 28. By means of the proximity sensors 28 it can be monitored whether seats below the support panels 1 are occupied or not, and the installation of such a sensor system is simple, as the sensors 28 can already be arranged on the printed circuit board 25 and coupled to conductor paths thereon.

As can be further seen in Fig. 2, connecting cables 29 are connected to the printed circuit boards 25, and the connecting cables 29 are guided along the support panels 1 to the first edge 9 thereof so that the printed circuit boards 25 can be connected to the respective electrical systems of the aircraft.

As can be seen in part b) of Fig. 6, the studs 17 are provided with an annular groove 31 adjacent to the distal end of the studs 17. These annular grooves 31 are effective as engagement means for a locking element in a passenger supply unit as will be discussed in detail below.

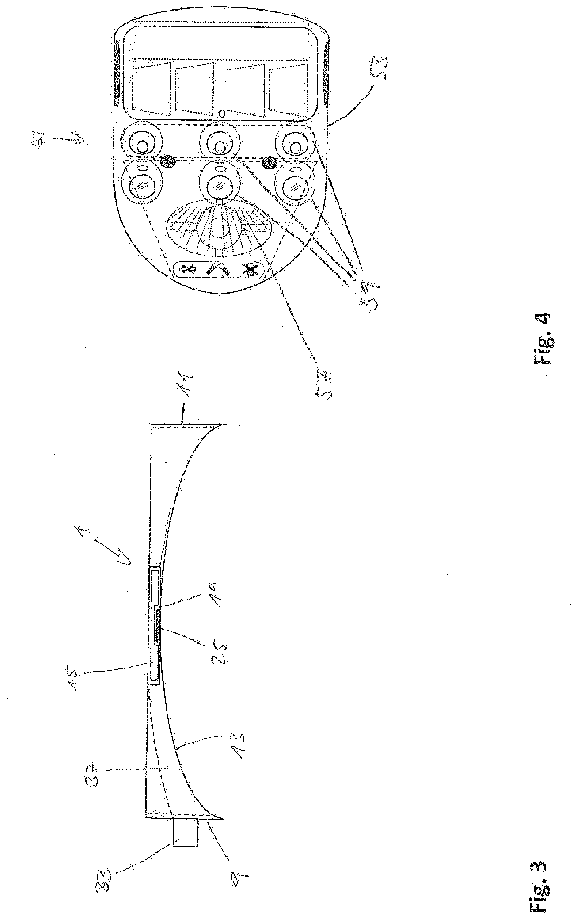

Finally, as it is shown in Figs. 2 and 3, a first and a second connector 33, 35 are provided on the first lateral edge 9 of the support panels 1. The first connector 33 is adjacent to the connection or corner between the first end face 5 and the first lateral edge 9, whereas the second connector 35 is arranged adjacent to the connection or corner between the second end face 7 and the first lateral edge 9. Further, the first and second connectors 33, 35 are connected to the air supply channel 15 via conduits 37 on the support panels 1 so that an airflow from the connectors 33, 35 to the air supply channel 15 and vice versa is enabled.

As it is further schematically shown in Fig. 2, the first connector 33 of one of the support panels 1 is connected to an air riser pipe 39 through which fresh air from a supply system of the aircraft is directed to the air supply channel 15. The second connector 35 of the first support panel 1 is connected to the first connector 33 of the second support panel 1 via a tube element 41 so that air is guided from the air supply channel 15 of one support panel 1 to the air supply channel 15 of the other support panel 1. In this way, the air supply channels 15 of adjacent support panels 1 can be coupled with each other. Further, it will be appreciated that a further support panel can be connected to the second support panel 1 at the second connector 35 thereof. Morover, the second connector 35 could be employed to be connected to an air riser pipe 39 whereas the first connector 33 connects to a further support panel 1.

The embodiments of a system of the present invention shown in the drawings further comprise a plurality of cover panels 43 which are shown in Fig. 1. The cover panels 43 have a planar main body comprising opposing transverse edges 45 which are aligned parallel to each other and which are connected by lateral edges 47 extending also in parallel to each other. Further, the main body of each cover panel 43 has a rear surface from which at least one blind connector 49 protrudes. In the preferred embodiments described herein the cover panels 43 comprise first and second blind connectors 49 which are arranged on a straight line extending perpendicularly to the transverse edges 45. The distance between the blind connectors 49 on the cover panels 43 corresponds to the distance a between adjacent air supply connectors or studs 17.

The blind connectors 49 of a cover panel 3 and the studs 17 on the mounting surface 13 are configured such that adjacent studs 17 and the blind connectors 49 can be brought into an engagement position in which the cover panel 43 is supported on the support panel 1. In particular, when being in the engagement position, the cover panel 43 is frictionally kept in a position in which the main body of the cover panel 43 abuts on the support panel 1. Further, in the engagement position the blind connectors 49 sealingly close the studs 17 so that an airflow through the openings of these studs 17 out of the air supply channel 15 is prevented.

The main body of the cover panels 43 is dimensioned such that when two cover panels 43 are in adjacent engagement positions (as shown in Fig. 2 for those two cover panels 43 coupled to the support panel 1), the transverse edges 45 of these cover panels 43 abut on each other so as to form a closed surface. Further, these cover panels 43 are received within the groove 19 with the lateral edges 47 of the cover panels 43 abutting on the side edges of the groove 19. In particular, the side edges of the groove 19 and the lateral edges 47 of the cover panels 43 can be configured such that a form fit is obtained when the cover panels 43 are fully inserted into the groove 19. In the embodiment shown in Fig. 1 the groove 9 has a dovetail-shaped cross section and the lateral edges 47 of the cover panels 43 are formed correspondingly so that this configuration results in a form fit of the cover panels 43 within the groove 19. However, other configurations are conceivable which also result in a form fit between the groove 19 and the cover panels 43. Similarly, a frictional engagement between the lateral edges 47 and the side edges can used as well.

Finally, the thickness of the planar main body of the cover panels 43 is chosen such that in the engagement position the surface of the cover panels 43 pointing to the interior of the cabin is flush with the mounting surface 13 of the support panel 1 outside the groove 19 so that a smooth overall surface is formed by the cover panels 43 and the mounting surface 1.

Moreover, the material of the main body of the cover panels 43 is translucent so that light emitted by the lighting elements or LEDs 27 on the printed circuit board 25 may pass through the cover panels 43 being in the engagement position in the groove 19 and may illuminate the region around passengers sitting in the seat rows.

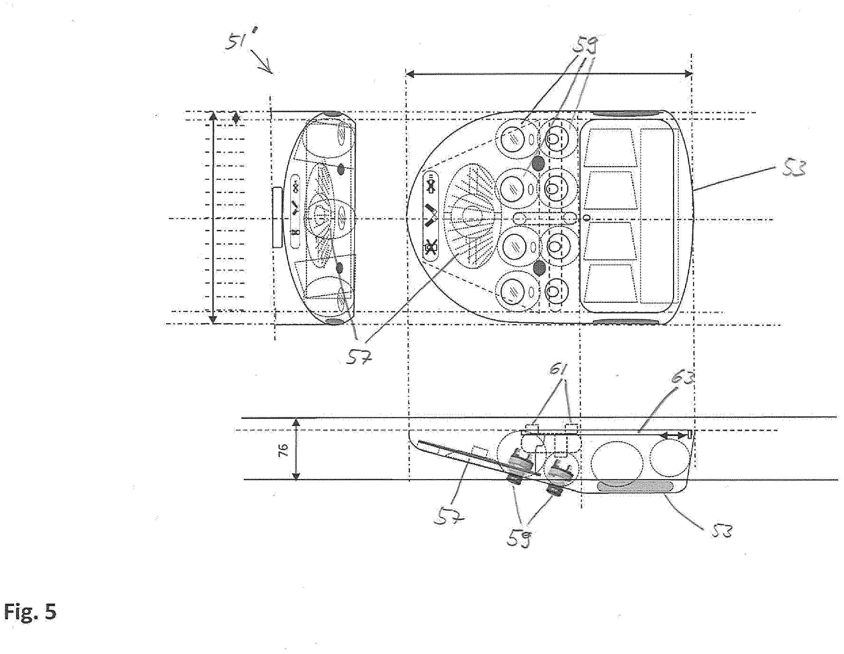

The embodiments of a panel system also include passenger supply units 51, 51', and examples thereof are shown in Figs. 4 and 5. The passenger supply unit 51 of Fig. 4 is configured for an arrangement in which it is intended to supply three seats below it whereas the example of Fig. 5 is intended to supply the passengers of four seats with fresh air etc.

Like known passenger supply units the units 51, 51' used in the embodiments of the present invention comprise a housing 53 which is provided with a fixing surface 55 that points towards the mounting surface 13, when the passenger supply unit 51, 51' is mounted on the support panel 1. Further, the passenger supply units 51, 51' comprise lighting elements 57, air showers in the form of a nozzle arrangement 59 for providing fresh air to passengers on the passenger seats, paxcall elements for calling a purser onboard an aircraft, speakers and probably additional entertainment devices.

The nozzle arrangement 59 of the passenger supply unit 51 of Fig. 4 comprises three sets of two nozzles so that air for three passengers is ejected, whereas the nozzle arrangement 59 of the passenger supply unit 51' of Fig. 5 comprises four sets of two nozzles.

In addition, the passenger supply units 51, 51' are provided with so called "O₂-boxes" (not shown), i.e. devices which generate gaseous oxygen by a chemical reaction inside a canister when being activated, so that passengers may by supplied with oxygen in case of a pressure drop inside the aircraft cabin. In order to allow in case of an emergency for an activation of the O₂-boxes in the passenger supply units 51, 51', the passenger supply units 51, 51' have to be electrically connected to the respective activation system of the aircraft.

In order to supply fresh air to the nozzle arrangement 55 of the passenger supply units 51, 51' these are provided with air reception connectors 61 which protrude from the fixing surface 55. In particular, in the preferred embodiments shown in the drawings, first and second air reception connectors 61 are provided on the fixing surface 53, and the distance between these two air reception connectors 61 corresponds to the distance a between adjacent air supply connectors or studs 17. Further, the air reception connectors 61 are connected to the nozzle arrangement 59 via conduits not shown in detail, so as to allow for an airflow from the air reception connectors 61 through the nozzle arrangement 59 into the aircraft cabin.

The air reception connectors 61 are configured such that the passenger supply units 51, 51' can be brought into an engagement position in which the air reception connectors 61 engage with two air supply connectors i.e. two studs 17. In particular, the tubular shaped air reception connectors 61 protrude into the studs 17 when being in the engagement position.

In the engagement position of the passenger supply units 51, 51' they are supported on the support panel 1, and an airflow is enabled from the air supply channel 15 through the air supply connectors 61 to the nozzle arrangement 59 of the passenger supply unit 51, 51'. Thus, the fresh air from the air supply channel 15 can be ejected to passengers sitting below the passenger supply units 51, 51' when they have taken their seats in the respective seat rows.

In order to allow for a mechanically locking of the passenger supply units 51, 51' to the support panel 1, the units 51, 51' are provided with a locking element 63 which is movably mounted on the passenger supply unit 51, 51' and can be moved between a locked and a release position.

Parts d) and e) of Fig. 6 shows a partial cross sectional view of that part of the passenger supply units 51, 51' adjacent to the air reception connectors 61 (part d)) and a top view of the locking element 63 (part e)), and it can be seen that the locking element 63 is configured such that it has keyhole-shaped openings 65 with a large diameter portion having a diameter that is slightly larger than the diameter of the studs 17, and a small diameter portion being dimensioned such that the diameter or width is smaller than the diameter of the studs 17. The small diameter portion may engage with the annular groove 31 in the studs 17. The center of the large diameter portion of one opening 65 is spaced from the center of the large diameter portion of the other opening 65 by a distance that corresponds to the distance a between adjacent studs 17, and the locking element 63 is movable between the locked position and the release position along a direction which is parallel to the mounting surface 13 and the fixing surface 55, respectively.

When the passenger supply units 51, 51' has been brought into the engagement position on two of the studs 17, i.e. the tubular reception connectors 61 were inserted into the studs 17, the locking element 63 can be shifted from the release position in which the large diameter portions of the openings 65 are aligned with studs 17, into the locked position. In the locked position of the locking element 63 the small diameter portion of the openings is aligned with the studs 17 and engages with the annular grooves 31. This engagement prevents a movement of the entire passenger supply units 51, 51' away from the mounting surface 13, whereas when locking element 63 is in the release position, a movement of the passenger supply units 51, 51' away from the support panel 1 is enabled.

Regarding the afore-mentioned design of the locking elements 63 and the respective engagements means it has to be noted that other designs are conceivable, and it is not essential that the locking elements 63 are movable in a plane parallel to the mounting surface 13. Instead, this is merely a preferred embodiment.

Moreover, the fixing surface 55 of the passenger supply units 51, 51' is provided with electrical reception elements in the form of spring biased contact elements 67 adjacent to one of the air reception connectors 61 (see part d) of Fig. 6). The contact elements 67 are arranged relative to this air reception connector 61 such that when the passenger supply unit 51, 51' is in the engagement position with two of the plurality of studs 17, the contact elements 67 are electrically connected with the electrical supply elements 23 of that supply arrangement 21 which comprises one of the studs 17 with which the air reception connectors 61 are engaged. In other words, the contact elements 67 are arranged on the fixings surface 55 in a mirror-inverted manner compared to the arrangement of the electrical supply elements 23 on the mounting surface 13. Hence, when the studs 17 are brought in engagement with the air reception connectors 61, at same time the electrical supply elements 23 get connected with the contact elements 67 on the passenger supply unit 51, 51'.

Initial installation and retrofitting of the first embodiment of a panel system according to the present invention is done as follows.

Firstly, support panels 1 with a groove 19 that is completely covered with cover panels 43 are mounted below the hatracks of the aircraft. In the next step, those cover panels 43 are removed from the support panels 1 that are at positions at which passenger supply units 51, 51' are required so as to be at the right position above a seat row. In order to facilitate this step, those lighting elements or LEDs 27 which are below cover panels 43 to be removed, can be switched so that it becomes obvious for the assemblyman which panels have to be detached from the support panel 1.

After removing the cover panels 43 by disengaging the blind connectors 49 from the respective air supply connectors or studs 17, the air reception connectors 61 of the passenger supply units 51, 51' are brought into engagement with the studs 17, and when the passenger supply units 51, 51' are held in the engagement position by frictional engagement between the studs 17 and the reception connectors 61, the locking elements 63 are shifted from the release position to locked position so that the locking elements 63 engage with the annular grooves 31 on the studs 17. At the same time the electrical connections are established, as the electrical supply elements 23 get connected with the contact elements 67. Here, it has to be noted that it is also conceivable that different from or in addition to the frictional engagement between the studs 17 and the reception connectors 61 further means may be provided which are adapted to keep the passenger supply unit 51, 51' in position, such as releaseable snap lock assemblies.

In this way, in one step the passenger supply units 51, 51' are finally positioned and fixed on the support panel 1, an airflow between the air supply channel 15 and the nozzle arrangement 59 is enabled and the passenger supply units 51, 51' are electrically coupled to the respective systems of the aircraft. Thus, it is not required to individually connect single cables or conduits, so that the entire assembly of the support panels 1 and the passenger supply units 51, 51' is facilitated to a large extend compared to prior art systems. At the same time the entire assembly provides for an improved outer appearance.

When an existing aircraft cabin arrangement is to be retrofitted with a new seat arrangement having different positions of the seat rows along the longitudinal axis of the aircraft cabin, it is also required that the passenger supply units 51, 51' are rearranged. With the above-described embodiment of a panel system this is done such that the passenger supply units 51, 51' are removed from the support panels 1 by firstly shifting the locking elements 63 from the locked position to the release position so that the locking elements 63 disengage from the annular grooves 31 on the studs 17 with the large diameter portions of the openings 65 then being aligned with the studs 17. Then the passenger supply units 51, 51' can be withdrawn from the studs 17. In the next step those cover panels 43 are removed from the support panels 1 that are at the intended new positions of the passenger supply units 51, 51', and the passenger supply units 51, 51' are mounted there in the already described manner. Finally, the cover panels 43 removed before are mounted at the old positions of the passenger supply units 51, 51' so as to close the remaining gaps along the groove 19 and the studs 17 therein so as to seal the air supply channel 15. Hence, the retrofitting process is also largely simplified and the improved appearance is maintained.

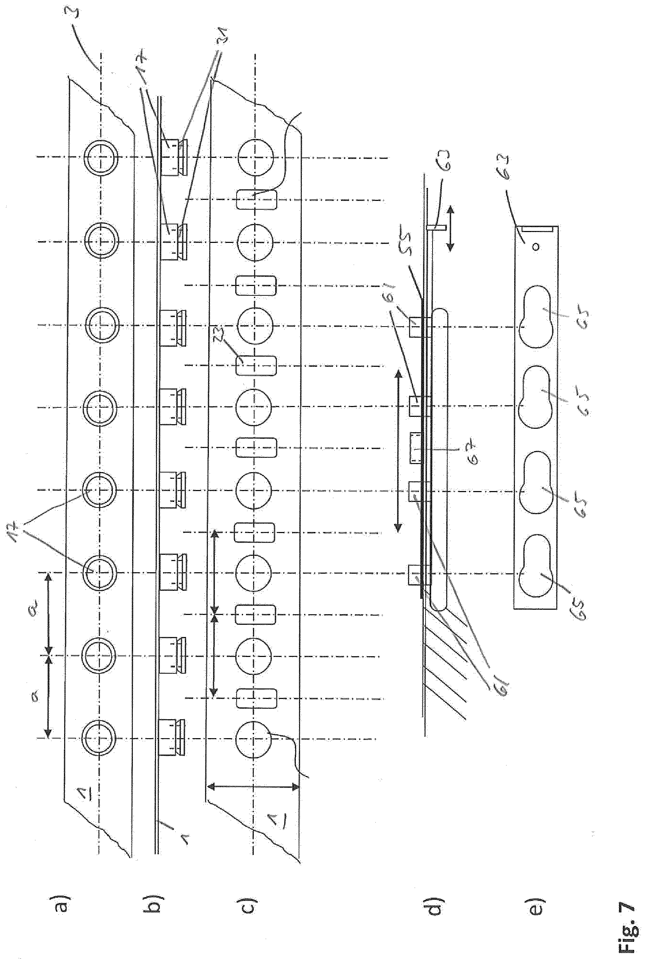

Fig. 7 shows views of a second embodiment of a panel system according to the present invention, these views corresponding to those of Fig. 6. As can be seen in part d) and e) of Fig. 7 the passenger supply units 51, 51' of the second embodiment comprise four air reception connectors 61 rather than two. Further, the electrical supply elements 23 arranged in the groove 19 of the support panel 1 are formed as sockets, and on the fixing surface 55 of the passenger supply unit 51, 51' plugs are located at the respective position so as to establish the electrical connections, when the passenger supply units 51, 51' are mechanically coupled with the support panel 1.

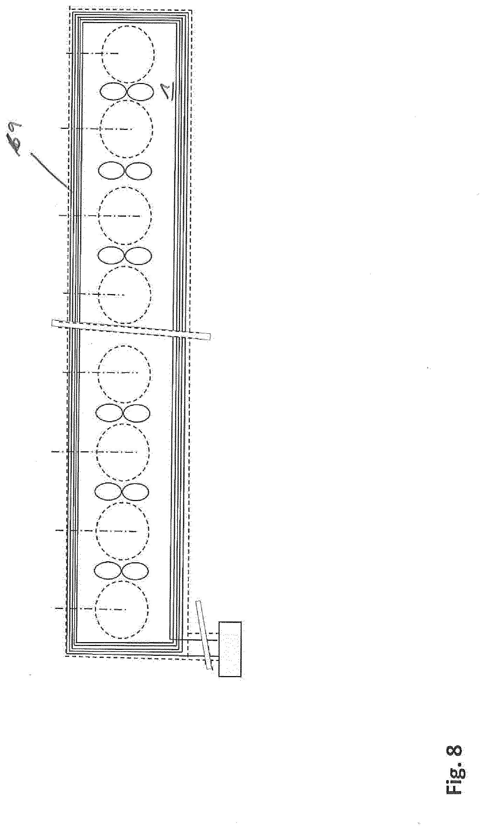

Finally, Fig. 8 is a schematic bottom view of the groove section of a support panel 1 of a third embodiment of the present invention. Different from the above described embodiments, the support panel 1 comprises a first induction coil 69 and the passenger supply unit 51, 51' comprises a second induction coil (not shown). The first and the second induction coils 69 are configured and arranged such that when the passenger supply units 51, 51' are in the engagement position with one of the plurality of the air supply connectors or studs 17, electrical signals can be transmitted from the first induction coil 69 to the second induction coil and vice versa. Thus, contactless transmission of electrical signals is also conceivable.

## Claims

1. Panel system for covering the ceiling portion of an aircraft cabin comprising:
- a support panel (1) which extends along a longitudinal axis (3) and comprises a mounting surface (13) adapted to receive panel elements, the mounting surface (13) being adapted to point towards the interior of the aircraft cabin,
wherein the support panel (1) comprises an air supply channel (15) which extends along the longitudinal axis (3),
wherein a plurality of air supply connectors (17) are provided on the mounting surface (13), the air supply connectors (17) being connected to the air supply channel (15) and having an outlet opening so as to be configured to allow for an airflow from the air supply channel (15) through the outlet opening, and wherein the air supply connectors (17) are arranged along the longitudinal axis (3) and the distance (a) between adjacent air supply connectors (17) is constant,
- a plurality of cover panels (43)
wherein each cover panel (43) comprises opposing transverse edges (45) which are aligned parallel to each other,
wherein each cover panel (43) is provided with at least one blind connector,
wherein the blind connector and the air supply connectors (17) are configured such that one air supply connector (17) and the blind connector can be brought into an engagement position in which the cover panel (43) having its blind connector in the engagement position is supported on the support panel (1), and
wherein the cover panels (43) are configured such that when two cover panels (43) are in adjacent engagement positions the transverse edges (45) of these cover panels (43) abut on each other in the longitudinal direction (3), and
- at least one passenger supply unit (51, 51'), which comprises a housing (53) with a fixing surface (55) and a nozzle arrangement (59) provided in the housing (53),
wherein the fixing surface (55) is provided with at least one air reception connector (61) which is configured such that the at least one passenger supply unit (51, 51') can be brought into an engagement position in which the air reception connector (61) engages with one of said air supply connectors (17) and in which the at least one passenger supply unit (51, 51') is supported on the support panel (1),
wherein the air reception connector (61) is connected to the nozzle arrangement (59) so as to allow for an airflow from the air reception connector (61) through the nozzle arrangement (59) into the aircraft cabin,
wherein when one of the at least one passenger supply units (51, 51') is in the engagement position with one of the air supply connectors (61), an airflow is enabled from the air supply channel (15) through said one air supply connector (61) to the nozzle arrangement (59) of said one passenger supply unit (51, 51'),
**characterized in that**
a groove (19) is formed in the mounting surface (13) of the support panel (1), the groove extending along the longitudinal axis (3), wherein the plurality of air supply connectors (17) are arranged within the groove (19), and
a surface of each of the plurality of cover panels (43) pointing towards the interior of the aircraft cabin is flush with the mounting surface (13) outside the groove (19), when each cover panel (43) is received in the groove (19) and the at least one blind connector of each cover panel (43) is in the engagement position on one of the plurality of air supply connectors (17).

2. Panel system according to Claim 1, wherein the fixing surface (55) of the at least one passenger supply unit (51, 51') is provided with first and second air reception connectors (61), the distance between which corresponds to the distance (a) between adjacent air supply connectors (17).

3. Panel system according to Claims 1 or 2, wherein the at least one cover panel (43) comprises first and second blind connectors, the distance between which corresponds to the distance (a) between adjacent air supply connectors (17), and
wherein the first and second blind connectors are arranged on a straight line extending perpendicularly to the transverse edges (45).

4. Panel system according to any of Claims 1 to 3, wherein the plurality of air supply connectors are formed as studs (17) protruding from the mounting surface (13).

5. Panel system according to any of Claims 1 to 4, wherein the at least one passenger supply unit (51, 51') is provided with a locking element (63) which is movably mounted on the passenger supply unit (51, 51') such that it is movable between a locked and a release position, wherein the locking element (63) of each passenger supply unit (51, 51') is configured such that
when one of the at least one passenger supply units (51, 51') is in the engagement position on one of the plurality of air supply connectors (17) and its locking element (63) is in the locked position, a movement of said one passenger supply unit (51, 51') away from the support panel (1) is prevented, and
when one of the at least one passenger supply units (51, 51') is in the engagement position on one the plurality of air supply connectors (17) and its locking element (63) is in the release position, a movement of said one passenger supply unit (51, 51') away from the support panel (1) is enabled which movement opens the connection between the at least one air reception connector (61) of said one passenger supply unit (51, 51') and said one air supply connector (17).

6. Panel system according to Claims 4 and 5, wherein the locking element (63) is movable between the locked position and the release position along a direction which is parallel to the mounting surface (13),
wherein the studs (17) are provided with engagement means (31) and
wherein when one of the at least one passenger supply unit (51, 51') is in the engagement position on one of the plurality of air supply connectors (17) and the locking element (63) of said one passenger supply unit (51, 51') is in the locked position, said locking element (63) is in engagement with the engagement means (31) on the stud (17) forming said one air supply connector.

7. Panel system according to any of Claims 1 to 6, wherein each of the plurality of air supply connectors (17) is part of a respective one of a plurality of supply arrangements (21) which are equally spaced along the longitudinal axis,
wherein each of the supply arrangements (21) comprises at least one electrical supply element (23) which is arranged in the mounting surface (13) and
wherein the position of the at least one electrical supply element (23) relative to the air supply connector (17) is identical for each supply arrangement (21).

8. Panel system according to Claim 7, wherein the at least one passenger supply (51, 51') unit is provided with at least one electrical reception element (67) adjacent to one of the at least one air reception connector (61),
wherein the at least one electrical reception element (67) is arranged relative to said one air reception connector (61) such that when the at least one passenger supply unit (51, 51') is in the engagement position with one of the plurality of air supply connectors (17), the at least one electrical reception element (67) is electrically connected with the at least one electrical supply element (23) of that supply arrangement (21) which comprises said one air supply connector (17).

9. Panel system according to any of Claims 1 to 8, wherein the support panel comprises at least one first induction coil (69)
wherein the at least one passenger supply unit (51, 51') comprises a second induction coil and
wherein the at least one first induction coil (69) and the second induction coil are configured and arranged such that when the at least one passenger supply unit (51, 51') is in the engagement position with one of the plurality of the air supply connectors (17) electrical signals can be transmitted from one of the at least one first induction coil (69) and the second induction coil to the other of the at least one first induction coil (69) and the second induction coil.

10. Panel system according to any of Claims 7 to 9, wherein the support panel (1) comprises a printed circuit board (25) on which the electrical supply elements (23) of each of the supply arrangements (21) are positioned and
wherein the printed circuit board (21) extends along or parallel to the longitudinal axis (3).

11. Panel system according to Claim 10, wherein the printed circuit board (25) is arranged on the mounting surface (13) and comprises lighting elements (27) and
wherein the at least one cover panel (43) is translucent.

12. Panel system according to Claim 10 or 11, wherein the printed circuit board (25) is arranged on the mounting surface (13) and comprises proximity sensors (28),
and wherein the at least one cover panel (43) is pervious for radiation generated by the proximity sensors (28).

13. Panel system according to any of Claims 1 to 12, wherein the support panel (43) extends along the longitudinal axis (3) between a first end face (5) and a second end face (7) and comprises first and second lateral edges (9, 11) on both sides of the longitudinal axis (3) between the first and the second end faces (5, 7),
wherein the first lateral edge (5) is provided with a first connector (33) and a second connector (35),
wherein the first connector (33) is arranged on the first lateral edge (9) adjacent to the connection between the first end face (5) and the first lateral edge (9),
wherein the second connector (35) is arranged on the first lateral edge (9) adjacent to the connection between the second end face (7) and the first lateral edge (9),
wherein the first and second connectors (33, 35) are connected to the air supply channel (15) so that an airflow from the first connector (33) to the air supply channel (15) and from the air supply channel (15) to the second connector (35) is enabled.

## Patentansprüche

1. Paneelsystem zum Abdecken des Deckenabschnitts einer Flugzeugkabine, das Folgendes umfasst:
- ein Stützpaneel (1), das sich entlang einer Längsachse (3) erstreckt und eine Montageoberfläche (13) umfasst, die dazu angepasst ist, Paneelelemente aufzunehmen, wobei die Montageoberfläche (13) dazu angepasst ist, zum Inneren der Flugzeugkabine zu zeigen, wobei das Stützpaneel (1) einen Luftzufuhrkanal (15) umfasst, der sich entlang der Längsachse (3) erstreckt, wobei mehrere Luftzufuhrverbinder (17) an der Montageoberfläche (13) bereitgestellt sind, wobei die Luftzufuhrverbinder (17) mit dem Luftzufuhrkanal (15) verbunden sind und eine Auslassöffnung aufweisen, um dazu ausgelegt zu werden, einen Luftstrom aus dem Luftzufuhrkanal (15) durch die Auslassöffnung zu ermöglichen, und
wobei die Luftzufuhrverbinder (17) entlang der Längsachse (3) angeordnet sind und der Abstand (a) zwischen benachbarten Luftzufuhrverbindern (17) konstant ist,
- mehrere Abdeckpaneele (43)
wobei jedes Abdeckpaneel (43) einander gegenüberliegende quer verlaufende Kanten (45) umfasst, die parallel zueinander ausgerichtet sind,
wobei jedes Abdeckpaneel (43) mit zumindest einem Blindverbinder versehen ist,
wobei der Blindverbinder und die Luftzufuhrverbinder (17) so ausgelegt sind, dass ein Luftzufuhrverbinder (17) und der Blindverbinder in eine Eingriffsposition gebracht werden können, in der der Blindverbinder des Abdeckpaneels (43) in seiner Eingriffsposition auf dem Stützpaneel (1) gestützt wird, und
wobei die Abdeckpaneele (43) so ausgelegt sind, dass, wenn sich zwei Abdeckpaneele (43) in benachbarten Eingriffspositionen befinden, die quer verlaufenden Kanten (45) dieser Abdeckpaneele (43) in der Längsrichtung (3) aneinander anliegen, und
- zumindest eine Passagierversorgungseinheit (51, 51'), die ein Gehäuse (53) mit einer Befestigungsoberfläche (55) und eine Düsenanordnung (59), bereitgestellt im Gehäuse (53), umfasst,
wobei die Befestigungsoberfläche (55) mit zumindest einem Luftaufnahmeverbinder (61) versehen ist, der so ausgelegt ist, dass die zumindest eine Passagierversorgungseinheit (51, 51') in eine Eingriffsposition gebracht werden kann, in der der Luftaufnahmeverbinder (61) in Eingriff mit einem der Luftzufuhrverbinder (17) kommt und wobei die zumindest eine Passagierversorgungseinheit (51, 51') auf dem Stützpaneel (1) gestützt wird,
wobei der Luftaufnahmeverbinder (61) mit der Düsenanordnung (59) verbunden ist, um einen Luftstrom aus dem Luftaufnahmeverbinder (61) durch die Düsenanordnung (59) in die Flugzeugkabine zu ermöglichen,
wobei, wenn eine der zumindest einen Passagierversorgungseinheiten (51, 51') im Eingriff mit einem der Luftzufuhrverbinder (61) ist, ein Luftstrom vom Luftzufuhrkanal (15) durch den einen Luftzufuhrverbinder (61) zur Düsenanordnung (59) der einen Passagierversorgungseinheit (51, 51') ermöglicht wird,
**dadurch gekennzeichnet, dass**
eine Nut (19) in der Montageoberfläche (13) des Stützpaneels (1) ausgebildet ist, wobei sich die Nut entlang der Längsachse (3) erstreckt, wobei die mehreren Luftzufuhrverbinder (17) innerhalb der Nut (19) angeordnet sind, und
eine Oberfläche von jedem der mehreren Abdeckungspaneele (43), die zum Inneren der Flugzeugkabine zeigt, bündig mit der Montageoberfläche (13) außerhalb der Nut (19) ist, wenn jedes Abdeckungspaneel (43) in der Nut (19) aufgenommen ist und der zumindest eine Blindverbinder jedes Abdeckungspaneels (43) in der Eingriffsposition an einem der mehreren Luftzufuhrverbinder (17) ist.

2. Paneelsystem nach Anspruch 1, wobei die Befestigungsoberfläche (55) der zumindest einen Passagierversorgungseinheit (51, 51') mit ersten und zweiten Luftaufnahmeverbindern (61) versehen ist, wobei der Abstand zwischen diesen dem Abstand (a) zwischen benachbarten Luftzufuhrverbindern (17) entspricht.

3. Paneelsystem nach Ansprüchen 1 oder 2, wobei das zumindest eine Abdeckungspaneel (43) erste und zweite Blindverbinder umfasst, wobei der Abstand zwischen diesen dem Abstand (a) zwischen benachbarten Luftzufuhrverbindern (17) entspricht, und
wobei die ersten und zweiten Blindverbinder auf einer geraden Linie angeordnet sind, die sich senkrecht zu den quer liegenden Kanten (45) erstreckt.

4. Paneelsystem nach einem der Ansprüche 1 bis 3, wobei die mehreren Luftzufuhrverbinder als Zapfen (17) ausgebildet sind, die aus der Montageoberfläche (13) herausragen.

5. Paneelsystem nach einem der Ansprüche 1 bis 4, wobei die zumindest eine Passagierversorgungseinheit (51, 51') mit einem Verriegelungselement (63) versehen ist, das bewegbar an der Passagierversorgungseinheit (51, 51') montiert ist, sodass es zwischen einer verriegelten und einer Freigabeposition bewegbar ist, wobei das Verriegelungselement (63) von jeder Passagierversorgungseinheit (51, 51') so ausgelegt ist, dass
wenn eine der einen oder mehreren Passagierversorgungseinheiten (51, 51') in der Eingriffsposition an einem der mehreren Luftzufuhrverbinder (17) ist und sich ihr Verriegelungselement (63) in der verriegelten Position befindet, eine Bewegung der einen Passagierversorgungseinheit (51, 51') weg vom Stützpaneel (1) verhindert wird, und
wenn eine der einen oder mehreren Passagierversorgungseinheiten (51, 51') in der Eingriffsposition an einem der mehreren Luftzufuhrverbinder (17) ist und sich ihr Verriegelungselement (63) in der Freigabeposition befindet, eine Bewegung der einen Passagierversorgungseinheit (51, 51') weg vom Stützpaneel (1) ermöglicht wird, wobei die Bewegung die Verbindung zwischen dem zumindest einen Luftaufnahmeverbinder (61) der Passagierversorgungseinheit (51, 51') und dem einen Luftzufuhrverbinder (17) öffnet.

6. Paneelsystem nach Ansprüchen 4 und 5, wobei das Verriegelungselement (63) zwischen der verriegelten Position und der Freigabeposition entlang einer Richtung bewegbar ist, die parallel zur Montageoberfläche (13) ist,
wobei die Zapfen (17) mit Eingriffsmitteln (31) versehen sind und
wobei, wenn die eine der einen oder mehreren Passagierversorgungseinheiten (51, 51') in der Eingriffsposition von einem der mehreren Luftzufuhrverbinder (17) ist und sich das Verriegelungselement (63) der einen Passagierversorgungseinheit (51, 51') in der verriegelten Position befindet, das Verriegelungselement (63) im Eingriff mit dem Eingriffsmittel (31) am Zapfen (17) ist, der den einen Luftzufuhrverbinder bildet.

7. Paneelsystem nach einem der Ansprüche 1 bis 6, wobei jeder der mehreren Luftzufuhrverbinder (17) Teil einer entsprechenden von mehreren Zufuhranordnungen (21) ist, die gleichmäßig entlang der Längsachse beabstandet sind,
wobei jede der Zufuhranordnungen (21) zumindest ein elektrisches Zufuhrelement (23) umfasst, das in der Montageoberfläche (13) angeordnet ist
wobei die Position des zumindest einen elektrischen Zufuhrelements (23) relativ zum Luftzufuhrverbinder (17) für jede Zufuhranordnung (21) identisch ist.

8. Paneelsystem nach Anspruch 7, wobei die zumindest eine Passagierversorgungseinheit (51, 51') mit zumindest einem elektrischen Aufnahmeelement (67) angrenzend an einen der einen oder mehreren Luftaufnahmeverbinder (61) versehen ist,
wobei das zumindest eine elektrische Aufnahmeelement (67) relativ zu dem einen Luftaufnahmeverbinder (61) angeordnet ist, sodass, wenn die zumindest eine Passagierversorgungseinheit (51, 51') in der Eingriffsposition mit einem der mehreren Luftzufuhrverbinder (17) ist, das zumindest eine elektrische Aufnahmeelement (67) elektrisch mit dem zumindest einen elektrischen Zufuhrelement (23) dieser Zufuhranordnung (21) verbunden ist, die den einen Luftzufuhrverbinder (17) umfasst.

9. Paneelsystem nach einem der Ansprüche 1 bis 8, wobei das Stützpanel zumindest eine erste Induktionsspule (69) umfasst,
wobei die zumindest eine Passagierversorgungseinheit (51, 51') eine zweite Induktionsspule umfasst, und wobei die zumindest eine erste Induktionsspule (69) und die zweite Induktionsspule dazu ausgelegt und so angeordnet sind, dass, wenn die zumindest eine Passagierversorgungseinheit (51, 51') in der Eingriffsposition mit einem der mehreren Luftzufuhrverbinder (17) ist, elektrische Signale von einer der zumindest einen ersten Induktionsspule (69) und der zweiten Induktionsspule an die andere aus der zumindest einen ersten Induktiohnsspule (69) und der zweiten Induktionsspule gesendet werden können.

10. Paneelsystem nach einem der Ansprüche 7 bis 9, wobei das Stützpaneel (1) eine Leiterplatte (25) umfasst, auf der die elektrischen Zufuhrelemente (23) von jeder der Zufuhranordnungen (21) positioniert sind und
wobei sich die Leiterplatte (21) entlang oder parallel zur Längsachse (3) erstreckt.

11. Paneelsystem nach Anspruch 10, wobei die Leiterplatte (25) auf der Montageoberfläche (13) angeordnet ist und Beleuchtungselemente (27) umfasst und
wobei das zumindest eine Abdeckungspaneel (43) durchscheinend ist.

12. Paneelsystem nach Anspruch 10 oder 11, wobei die Leiterplatte (25) auf der Montageoberfläche (13) angeordnet ist und Näherungssensoren (28) umfasst und wobei das zumindest eine Abdeckungspaneel (43) durchlässig für durch die Näherungssensoren (28) erzeugte Strahlung ist.

13. Paneelsystem nach einem der Ansprüche 1 bis 12, wobei sich das Stützpaneel (43) entlang der Längsachse (3) zwischen einer ersten Endfläche (5) und einer zweiten Endfläche (7) erstreckt und erste und zweite laterale Kanten (9, 11) auf beiden Seiten der Längsachse (3) zwischen der ersten und der zweiten Endfläche (5, 7) umfasst,
wobei die erste laterale Kante (5) mit einem ersten Verbinder (33) und einem zweiten Verbinder (35) versehen ist,
wobei der erste Verbinder (33) an der ersten lateralen Kante (9) angrenzend an die Verbindung zwischen der ersten Endfläche (5) und der ersten lateralen Kante (9) angeordnet ist,
wobei der zweite Verbinder (35) an der ersten lateralen Kante (9) angrenzend an die Verbindung zwischen der zweiten Endfläche (7) und der ersten lateralen Kante (9) angeordnet ist,
wobei der erste und der zweite Verbinder (33, 35) mit dem Luftzufuhrkanal (15) verbunden sind, sodass ein Luftstrom vom ersten Verbinder (33) zum Luftzufuhrkanal (15) und vom Luftzufuhrkanal (15) zum zweiten Verbinder (35) ermöglicht ist.

## Revendications

1. Système de panneaux pour recouvrir la partie de plafond d'une cabine d'aéronef comprenant :
un panneau de support (1) qui s'étend le long d'un axe longitudinal (3) et comprend une surface de montage (13) conçue pour recevoir des éléments de panneau, la surface de montage (13) étant conçue pour pointer vers l'intérieur de la cabine d'aéronef,
le panneau de support (1) comprenant un canal d'alimentation en air (15) qui s'étend le long de l'axe longitudinal (3),
une pluralité de raccords d'alimentation en air (17) étant disposés sur la surface de montage (13), les raccords d'alimentation en air (17) étant reliés au canal d'alimentation en air (15) et ayant une ouverture de sortie de sorte à être conçus pour permettre un écoulement d'air provenant du canal d'alimentation en air (15) à travers l'ouverture de sortie, et
les raccords d'alimentation en air (17) étant disposés le long de l'axe longitudinal (3) et la distance (a) entre des raccords d'alimentation en air (17) adjacents étant constante,
une pluralité de panneaux de recouvrement (43)
chaque panneau de recouvrement (43) comprenant des bords transversaux opposés (45) qui sont alignés parallèlement les uns aux autres,
chaque panneau de recouvrement (43) comprenant au moins un raccord aveugle,
le raccord aveugle et les raccords d'alimentation en air (17) étant conçus de sorte qu'un raccord d'alimentation en air (17) et le raccord aveugle puissent être amenés dans une position de mise en prise dans laquelle le panneau de recouvrement (43) ayant son raccord aveugle dans la position de mise en prise est supporté sur le panneau de support (1), et
les panneaux de recouvrement (43) étant conçus de sorte que lorsque deux panneaux de recouvrement (43) sont dans des positions de mise en prise adjacentes, les bords transversaux (45) de ces panneaux de recouvrement (43) viennent en butée l'un sur l'autre dans la direction longitudinale (3), et
au moins une unité d'alimentation pour passager (51, 51'), qui comprend un boîtier (53) avec une surface de fixation (55) et un agencement de buse (59) disposé dans le boîtier (53),
la surface de fixation (55) étant pourvue d'au moins un raccord de réception d'air (61) qui est conçu de sorte que l'au moins une unité d'alimentation pour passager (51, 51') puisse être amenée dans une position de mise en prise dans laquelle le raccord de réception d'air (61) vient en prise avec l'un desdits raccords d'alimentation en air (17) et dans laquelle l'au moins une unité d'alimentation pour passager (51, 51') est supportée sur le panneau de support (1),
le raccord de réception d'air (61) étant relié à l'agencement de buse (59) de sorte à permettre un écoulement d'air provenant du raccord de réception d'air (61) à travers l'agencement de buse (59) dans la cabine d'aéronef,
lorsque l'une des au moins une unité d'alimentation pour passager (51, 51') est dans la position de mise en prise avec l'un des raccords d'alimentation en air (61), un écoulement d'air étant permis en provenance du canal d'alimentation en air (15) à travers ledit un raccord d'alimentation en air (61) vers l'agencement de buse (59) de ladite une unité d'alimentation pour passager (51, 51'),
**caractérisé en ce que**
une rainure (19) est formée dans la surface de montage (13) du panneau de support (1), la rainure s'étendant le long de l'axe longitudinal (3), la pluralité de raccords d'alimentation en air (17) étant disposée à l'intérieur de la rainure (19), et
une surface de chacun de la pluralité de panneaux de recouvrement (43) pointant vers l'intérieur de la cabine d'aéronef étant au même niveau que la surface de montage (13) à l'extérieur de la rainure (19), lorsque chaque panneau de recouvrement (43) est reçu dans la rainure (19) et que l'au moins un raccord aveugle de chaque panneau de recouvrement (43) est dans la position de mise en prise sur l'un de la pluralité de raccords d'alimentation en air (17).

2. Système de panneaux selon la revendication 1, la surface de fixation (55) de l'au moins une unité d'alimentation en air pour passager (51, 51') étant pourvue de premier et second raccords de réception d'air (61), la distance entre eux correspondant à la distance (a) entre des raccords d'alimentation en air (17) adjacents.

3. Système de panneaux selon la revendication 1 ou 2, l'au moins un panneau de recouvrement (43) comprenant des premier et second raccords aveugles, la distance entre eux correspondant à la distance (a) entre des raccords d'alimentation en air (17) adjacents, et
les premier et second raccords aveugles étant disposés sur une ligne droite s'étendant perpendiculairement aux bords transversaux (45).

4. Système de panneaux selon l'une quelconque des revendications 1 à 3, la pluralité de raccords d'alimentation en air étant formés comme des goujons (17) faisant saillie de la surface de montage (13).

5. Système de panneaux selon l'une quelconque des revendications 1 à 4, l'au moins une unité d'alimentation pour passager (51, 51') étant pourvue d'un élément de verrouillage (63) qui est monté mobile sur l'unité d'alimentation pour passager (51, 51') de sorte qu'il soit mobile entre une position verrouillée et une position de libération, l'élément de verrouillage (63) de chaque unité d'alimentation pour passager (51, 51') étant conçu de sorte que
lorsque l'une des au moins une unité d'alimentation pour passager (51, 51') est dans la position de mise en prise sur l'un de la pluralité de raccords d'alimentation en air (17) et que son élément de verrouillage (63) est dans la position verrouillée, un mouvement de ladite une unité d'alimentation pour passager (51, 51') à l'opposé du panneau de support (1) soit empêché, et
lorsque l'une des au moins une unité d'alimentation pour passager (51, 51') est dans la position de mise en prise sur l'un de la pluralité de raccords d'alimentation en air (17) et que son élément de verrouillage (63) est dans la position de libération, un mouvement de ladite une unité d'alimentation pour passager (51, 51') à l'opposé du panneau de support (1) est permis, lequel mouvement ouvrant la liaison entre l'au moins un raccord de réception d'air (61) de ladite une unité d'alimentation pour passager (51, 51') et ledit un raccord d'alimentation en air (17).

6. Système de panneaux selon les revendications 4 et 5, l'élément de verrouillage (63) étant mobile entre la position verrouillée et la position de libération le long d'une direction qui est parallèle à la surface de montage (13),
les goujons (17) étant pourvus d'un moyen de mise en prise (31) et
lorsque l'une des au moins une unité d'alimentation pour passager (51, 51') est dans la position de mise en prise sur l'un de la pluralité de raccords d'alimentation en air (17) et que l'élément de verrouillage (63) de ladite une unité d'alimentation pour passager (51, 51') est dans la position verrouillée, ledit élément de verrouillage (63) étant en prise avec le moyen de mise en prise (31) sur le goujon (17) formant ledit un raccord d'alimentation en air.

7. Système de panneaux selon l'une quelconque des revendications 1 à 6, chacun de la pluralité de raccords d'alimentation en air (17) faisant partie d'un agencement d'alimentation respectif parmi une pluralité d'agencements d'alimentation (21) qui sont espacés de manière égale le long de l'axe longitudinal,
chacun des agencements d'alimentation (21) comprenant au moins un élément d'alimentation électrique (23) qui est disposé dans la surface de montage (13) et
la position de l'au moins un élément d'alimentation électrique (23) par rapport au raccord d'alimentation en air (17) étant identique pour chaque agencement d'alimentation (21).

8. Système de panneaux selon la revendication 7, l'au moins une unité d'alimentation pour passager (51, 51') étant pourvue d'au moins un élément de réception électrique (67) adjacent à l'un des au moins un raccord de réception d'air (61),
l'au moins un élément de réception électrique (67) étant disposé par rapport audit un raccord de réception d'air (61) de sorte que lorsque l'au moins une unité d'alimentation pour passager (51, 51') est dans la position de mise en prise avec l'un de la pluralité de raccords d'alimentation en air (17), l'au moins un élément de réception électrique (67) soit connecté électriquement à l'au moins un élément d'alimentation électrique (23) de cet agencement d'alimentation (21) qui comprend ledit un raccord d'alimentation en air (17) .

9. Système de panneaux selon l'une quelconque des revendications 1 à 8, le panneau de support comprenant au moins une première bobine d'induction (69)
l'au moins une unité d'alimentation pour passager (51, 51') comprenant une seconde bobine d'induction et
l'au moins une première bobine d'induction (69) et la seconde bobine d'induction étant conçues et disposées de sorte que lorsque l'au moins une unité d'alimentation pour passager (51, 51') est dans la position de mise en prise avec l'un de la pluralité de raccords d'alimentation en air (17), des signaux électriques puissent être transmis de l'une de l'au moins une première bobine d'induction (69) et de la seconde bobine d'induction à l'autre de l'au moins une première bobine d'induction (69) et de la seconde bobine d'induction.

10. Système de panneaux selon l'une quelconque des revendications 7 à 9, le panneau de support (1) comprenant une carte de circuit imprimé (25) sur laquelle les éléments d'alimentation électrique (23) de chacun des agencements d'alimentation (21) sont positionnés et
la carte de circuit imprimé (21) s'étendant le long de l'axe longitudinal (3) ou parallèlement à celui-ci.

11. Système de panneaux selon la revendication 10, la carte de circuit imprimé (25) étant disposée sur la surface de montage (13) et comprenant des éléments d'éclairage (27) et
l'au moins un panneau de recouvrement (43) étant translucide.

12. Système de panneaux selon la revendication 10 ou 11, la carte de circuit imprimé (25) étant disposée sur la surface de montage (13) et comprenant des capteurs de proximité (28),
et l'au moins un panneau de recouvrement (43) étant perméable au rayonnement généré par les capteurs de proximité (28).

13. Système de panneaux selon l'une quelconque des revendications 1 à 12, le panneau de support (43) s'étendant le long de l'axe longitudinal (3) entre une première face d'extrémité (5) et une seconde face d'extrémité (7) et comprenant des premier et second bords latéraux (9, 11) des deux côtés de l'axe longitudinal (3) entre les première et seconde faces d'extrémité (5, 7),
le premier bord latéral (5) étant pourvu d'un premier raccord (33) et d'un second raccord (35),
le premier raccord (33) étant disposé sur le premier bord latéral (9) adjacent à la liaison entre la première face d'extrémité (5) et le premier bord latéral (9),
le second raccord (35) étant disposé sur le premier bord latéral (9) adjacent à la liaison entre la seconde face d'extrémité (7) et le premier bord latéral (9),
les premier et second raccords (33, 35) étant reliés au canal d'alimentation en air (15) de sorte qu'un écoulement d'air du premier raccord (33) vers le canal d'alimentation en air (15) et du canal d'alimentation en air (15) vers le second raccord (35) soit permis.
